# EUROPÄISCHE PATENTSCHRIFT

(11) **EP 2 853 402 B1**
(45) Veröffentlichungstag und Bekanntmachung des Hinweises auf die Patenterteilung: **14.11.2018**
(21) Anmeldenummer: 14184192.4
(22) Anmeldetag: 10.09.2014
(51) Int. Cl.: B41J 2/14, B41J 3/28, B41J 3/407, B41F 17/30

(54) **Maschine zum Tintenstrahl-Bedrucken von dreidimensionalen Objekten**
Machine for ink-jet printing of three-dimensional objects
Machine destinée à l'impression à jet d'encre d'objets tridimensionnels

(30) Priorität: 26.09.2013 DE 102013016006
(43) Veröffentlichungstag der Anmeldung: 01.04.2015
(73) Patentinhaber: Heidelberger Druckmaschinen AG, 69115 Heidelberg (DE)
(72) Erfinder: Möhringer, Markus, 69469 Weinheim (DE); Niggemann, Henning, 69221 Dossenheim (DE)

(56) Entgegenhaltungen:
- US-A1- 2002 097 280
- US-B1- 6 538 767

## Beschreibung

Die vorliegende Erfindung betrifft eine Maschine zum Tintenstrahl-Bedrucken von dreidimensionalen Objekten mit den Merkmalen des Oberbegriffs von Anspruch 1 und mit den Merkmalen des Oberbegriffs von Anspruch 11.

Die Erfindung liegt in dem **technischen Gebiet** des Erzeugens von Druckbildern auf gekrümmten Oberflächen von Objekten, wie z.B. von Bällen oder anderen kugelförmigen Produkten.

Der bekannte **Stand der Technik** in diesem technischen Gebiet umfasst Folgendes:
Die US 6,923,115 B1 offenbart ein Gerät zum Bedrucken von Bällen. Die Bälle sind in einem Rondell bevorratet und werden von einem mechanischen Greifer zu einem Tintenstrahldruckkopf geführt und während des Druckens um zwei Achsen gedreht. Der mechanische Greifer erfasst die Bälle an zwei sich gegenüberliegenden Stellen mit zwei Klemmbacken und klemmt den Ball. Einer der beiden Klemmbacken ist angetrieben. Die beiden Klemmbacken sind an einem Rahmen aufgenommen, der ebenfalls angetrieben ist.

Die JP 2007-8110 A offenbart auch ein Gerät zum Bedrucken von Bällen per Inkjet. Ein Ball wird während des Druckens von einem Greifermechanismus festgehalten, welcher als eine Spannvorrichtung ausgebildet ist. Das Gerät verfügt zudem über drei Antriebe, welche den Ball um zwei Achsen drehen und in eine Richtung verschieben.

Die US 2002/0134257A1offenbart ein weiteres Gerät zum Bedrucken von Bällen per Inkjet. Der Ball wird zwischen zwei Haltestiften geklemmt und ist um zwei senkrecht aufeinander stehende Achsen drehbar.

Die JP 08-207265 A offenbart eine Maschine zum Bedrucken von Zylindern per Inkjet. Der Zylinder ist dabei auf zwei drehbaren Tragzylindern drehbar gelagert und wird von einem parallel zur Zylinderachse verfahrbaren Druckkopf bedruckt.

Die US2002/0097280A1offenbart eine Vorrichtung zum Bedrucken von kugelförmigen Objekten mittels Tintenstrahl-Druckköpfen. Das zu bedruckende Objekt kann von einem Vakuum-Halter aufgenommen sein. Der Halter selbst ist durch einen Motor angetrieben und an einer Spinne befestigt, welche wiederum von einem Motor angetrieben ist. Auf diese Weise kann das zu bedruckende Objekt um zwei senkrecht aufeinander stehende Achsen rotiert werden. Das Dokument offenbart als alternative Ausführungsform auch einen Drehtisch zur Aufnahme der Objekthalter anstelle der Spinne. Bei dieser Ausführungsform sind die Tintenstrahl-Druckköpfe schwenkbar aufgenommen.

Die US 6,538,767 B1 offenbart eine Vorrichtung zum Bedrucken eines kugelförmigen Objektes, wobei das Objekt in einem rotativ angetriebenen Saughalter aufgenommen sein kann. Es ist auch offenbart, dass ein Tintenstrahl-Druckkopf schwenkbar aufgenommen sein kann. Das Bedrucken der Oberfläche des Objekts erfolgt somit durch Rotation des Objektes und Verschwenken des Druckkopfes.

Die Nutzung der im genannten Stand der Technik beschriebenen technischen Lösung(en) kann **Nachteile** mit sich führen.

Vor diesem Hintergrund ist es **Aufgabe** der vorliegenden Erfindung, eine gegenüber dem Stand der Technik verbesserte Maschine zu schaffen, welche es ermöglicht, ein dreidimensionales Objekt an seiner Oberfläche zu bedrucken und dieses dabei sicher und ohne Beschädigungen zu halten.

Eine erfindungsgemäße **Lösung** dieser Aufgabe stellt eine Maschine mit den Merkmalen von Hauptanspruch 1 und mit den Merkmalen von Hauptanspruch 11 dar.

Eine erfindungsgemäße Maschine zum Tintenstrahl-Bedrucken von dreidimensionalen Objekten mit einer Vorrichtung zum Tintenstrahl-Bedrucken eines Objekts, welche einen Tintenstrahldruckkopf umfasst, einer Vorrichtung zum Halten des Objekts und einer Vorrichtung zum Drehen des Objekts, welche einen ersten Antrieb und einen zweiten Antrieb zum Drehen des Objekts um zwei voneinander verschiedene Drehachsen umfasst, wobei die Vorrichtung zum Halten des Objekts wenigstens einen Sauger umfasst, zeichnet sich dadurch aus, dass die Vorrichtung zum Drehen des Objekts an einer Vorrichtung zum Ändern des Abstands der Objektoberfläche vom Tintenstrahldruckkopf angeordnet ist, wobei letztere Vorrichtung einen dritten Antrieb zum Verändern dieses Abstands umfasst.

Die erfindungsgemäße Maschine ermöglicht es mit **Vorteil,** ein dreidimensionales Objekt, z.B. einen Ball, an beliebigen Stellen seiner Oberfläche zu bedrucken und das Objekt dabei sicher und ohne Beschädigungen an der Oberfläche zu halten. Der Bereich, indem das Objekt gehalten wird, macht dabei einen nur einen geringen Anteil der Oberfläche aus, d.h. ein überwiegender Teil der Oberfläche bleibt für das Drucken zugänglich. Das Objekt ist dabei einfach und in beliebige Richtungen drehbar.

Der Ball kann im Wesentlichen kugelförmig sein, d. h. ein Hand- oder Fußball, oder er kann ein Rotationsellipsoid sein und zwei spitz zulaufende Enden haben, z. B. ein Rugbyball oder ein Ball für American Football. Der Ball weist eine gasgefüllte Hülle, z. B. aus Leder, Gummi oder Kunststoff, auf. Die Hülle kann Nähte aufweisen.

Die beiden Antriebe sind bevorzugt elektrische Rotations-Antriebe. Der Tintenstrahldruckkopf ist bevorzugt derart angeordnet, dass die Tintentropfen im Wesentlichen nach unten ausgestoßen werden.

Vorteilhafte und daher **bevorzugte Weiterbildungen** dieser Erfindung ergeben sich aus den zugehörigen Unteransprüchen sowie aus der Beschreibung und den zugehörigen Zeichnungen.

Eine bevorzugte Weiterbildung der erfindungsgemäßen Maschine kann sich dadurch auszeichnen, dass die Vorrichtung zum Drehen des Objekts eine **Schwinge** umfasst, wobei der erste Antrieb die Schwinge und der zweite Antrieb den Sauger antreiben. Die Schwinge kann bevorzugt im Wesentlichen L-förmig ausgebildet sein. Der erste Antrieb ist bevorzugt an einem Ende der Schwinge angeordnet. Der erste Antrieb ist bevorzugt an einem gegenüberliegenden Ende der Schwinge angeordnet.

Eine bevorzugte Weiterbildung der erfindungsgemäßen Maschine kann sich dadurch auszeichnen, dass sich die **Drehachsen** kreuzen und senkrecht aufeinander stehen. Die Drehachsen liegen bevorzugt im Wesentlichen parallel zu den beiden Armen einer L-förmigen Schwinge. Der Kreuzungspunkt liegt bevorzugt im Zentrum des Objekts, z.B. im Ballmittelpunkt. Die erste Drehachse liegt bevorzugt in einer horizontalen Ebene.

Eine bevorzugte Weiterbildung der erfindungsgemäßen Maschine kann sich dadurch auszeichnen, dass die Schwinge an der **Vorrichtung zum Verändern des Abstands** des Objekts vom Tintenstrahldruckkopf angeordnet ist. Diese Vorrichtung ist bevorzugt eine in der vertikalen bewegbare Stange mit einem Linearantrieb. Der erste Antrieb ist bevorzugt an der Vorrichtung, insbesondere an der Stange, angeordnet. Bei einer Auf- und Abbewegung der Stange durch den Linearantrieb wird der erste Antrieb zum Drehen der Schwinge und die Schwinge mitgenommen.

Eine bevorzugte Weiterbildung der erfindungsgemäßen Maschine kann sich dadurch auszeichnen, dass die Vorrichtung zum Verändern des Abstands des Objekts vom Tintenstrahldruckkopf einen **vierten Antrieb** zum Drehen der Vorrichtung zum Verändern des Abstands des Objekts vom Tintenstrahldruckkopf umfasst. Die Drehbewegung erlaubt es, das Objekt parallel zu einer Werkzeugebene der Maschine (bevorzugt in einer im Wesentlichen horizontalen Ebene) zu bewegen und in den jeweiligen Wirkbereich verschiedener Einheiten der Werkzeugebene zu bringen und dort zu positionieren. Die Einheiten sind insbesondere der Tintenstrahldruckkopf und eine Einheit zum Trocknen und/oder Härten des Aufdrucks durch Bestrahlung.

Eine bevorzugte Weiterbildung der erfindungsgemäßen Maschine kann sich dadurch auszeichnen, dass die Vorrichtung zum Drehen des Objekts **drei Tragkugeln** umfasst, wobei der erste Antrieb eine erste Tragkugel und der zweiten Antrieb eine zweite Tragkugel antreiben, der erste und der zweite Antrieb jeweils ein **Reibrad** umfassen und der Sauger einen **Ventilator** umfasst. Die Ausführungsform bietet den Vorteil, dass das Objekt frei in alle Richtungen drehbar ist und jede Stelle der Objektoberfläche bedruckt werden kann. Über eine Steuerung werden die beiden Antriebe derart angesteuert, dass eine gewünschte Bewegung des Objekts erzeugt wird.

Eine bevorzugte Weiterbildung der erfindungsgemäßen Maschine kann sich dadurch auszeichnen, dass die Vorrichtung zum Tintenstrahl-Bedrucken einen **fünften Antrieb** zum Positionieren des Tintenstrahldruckkopfs relativ zum Objekt und einen **Sensor** zum Messen des Abstands von Tintenstrahldruckkopf und Objekt umfasst. Der fünfte Antrieb kann den Druckkopf in Richtung zum Mittelpunkt des Objekts vor- oder zurückstellen und dadurch den Druckabstand, d.h. die Tintenflugweite, ändern. Der fünfte Antrieb kann den Kopf aber auch Drehen und Schwenken, um den Kopf immer senkrecht zur Vorwärts-Druckrichtung auszurichten und gegebenenfalls eine Neigungsanpassung durchzuführen.

Eine bevorzugte Weiterbildung der erfindungsgemäßen Maschine kann sich dadurch auszeichnen, dass das Objekt ein **Ball** ist, wobei der Ball eine gasgefüllte Hülle umfasst und die Maschine eine Vorrichtung zum Befüllen des Objekts mit **Gas** umfasst. Dies ermöglicht es mit Vorteil, noch nicht gasbefüllte Bälle und oder auch zu wenig oder zu viel befüllte Bälle ein die Druckmaschine einzusetzen. Die Befüllung mit Gas kann dann inline vorgenommen und gegebenenfalls korrigiert werden.

Eine bevorzugte Weiterbildung der erfindungsgemäßen Maschine kann sich dadurch auszeichnen, dass die Vorrichtung zum Befüllen des Balls mit Gas eine **Regelung** umfasst, welche den Ball solange mit Gas befüllt oder entleert, bis der Abstand des Balls zum Tintenstrahldruckkopf einem vorgegebenen Wert entspricht. Da sich der Umfang des Objekts mit dem Druck der Befüllung ändert, kann durch eine Änderung des Gasdrucks im Innern des Objekts eine Umfangsanpassung herbeigeführt werden. Bei sich änderndem Umfang ändert sich auch der Abstand der zu bedruckenden Stelle der Objektoberfläche zum Druckkopf. Ein Antrieb zum Verstellen des Druckkopfs kann auf diese Weise eingespart werden. Die Anpassung des Drucks im Objekt kann auch kontinuierlich erfolgen. Hierzu kann eine kontinuierliche Abstandsmessung erfolgen. Bei abweichendem Abstand wird über die Regelung der Gasdruck entsprechend korrigiert. Auf diese Weise kann der Abstand in einem vorgegebenen Wertebereich gehalten werden (minimaler und maximaler Druckabstand).

Eine bevorzugte Weiterbildung der erfindungsgemäßen Maschine kann sich dadurch auszeichnen, dass die Vorrichtung zum Halten des Objekts wenigstens **zwei oder drei Sauger** umfasst und dass die Sauger benachbart zueinander an der Vorrichtung zum Halten des Objekts angeordnet sind. Auf diese Weise können mehrere kleine Sauger (anstatt eines großen Saugers) eingesetzt werden und diese können sehr nahe beieinander angeordnet werden, so dass der überwiegende Anteil der Objektoberfläche unbehindert bedruckt werden kann.

Eine erfindungsgemäße Maschine zum Tintenstrahl-Bedrucken von dreidimensionalen Objekten mit einer Vorrichtung zum Tintenstrahl-Bedrucken eines Objekts, welche einen Tintenstrahldruckkopf umfasst, einer Vorrichtung zum Halten des Objekts, einer Vorrichtung (9) zum Drehen des Objekts (2), welche einen ersten Antrieb (A1) und einen zweiten Antrieb (A2) zum Drehen des Objekts (2) um zwei voneinander verschiedene Drehachsen (10, 11) umfasst und einer Werkzeugebene, wobei die Werkzeugebene über der Vorrichtung zum Halten des Objekts angeordnet ist wobei der Tintenstrahldruckkopf in der Werkzeugebene angeordnet ist oder mehrere Tintenstrahldruckköpfe in der Werkzeugebene angeordnet sind und wobei die Werkzeugebene verschiedene Einheiten aufweist und der Tintenstrahlkopf bzw. die Tintenstrahlköpfe eine Einheit der verschiedenen Einheiten darstellt bzw. darstellen, wobei die Vorrichtung (18) zum Halten des Objekts (2) wenigstens einen Sauger (8a) umfasst, zeichnet sich dadurch aus, dass eine Vorrichtung zum Ändern des Abstands der Objektoberfläche vom in der Werkzeugebene angeordneten Tintenstrahldruckkopf vorhanden ist.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die **Zeichnungen** zeigen:
- Figur 1: Eine Perspektivansicht eines ersten bevorzugten Ausführungsbeispiels einer erfindungsgemäßen Maschine;
- Figur 2: Perspektivansicht eines zweiten bevorzugten Ausführungsbeispiels einer erfindungsgemäßen Maschine; und
- Figur 3: Perspektivansicht eines dritten bevorzugten Ausführungsbeispiels einer erfindungsgemäßen Maschine.

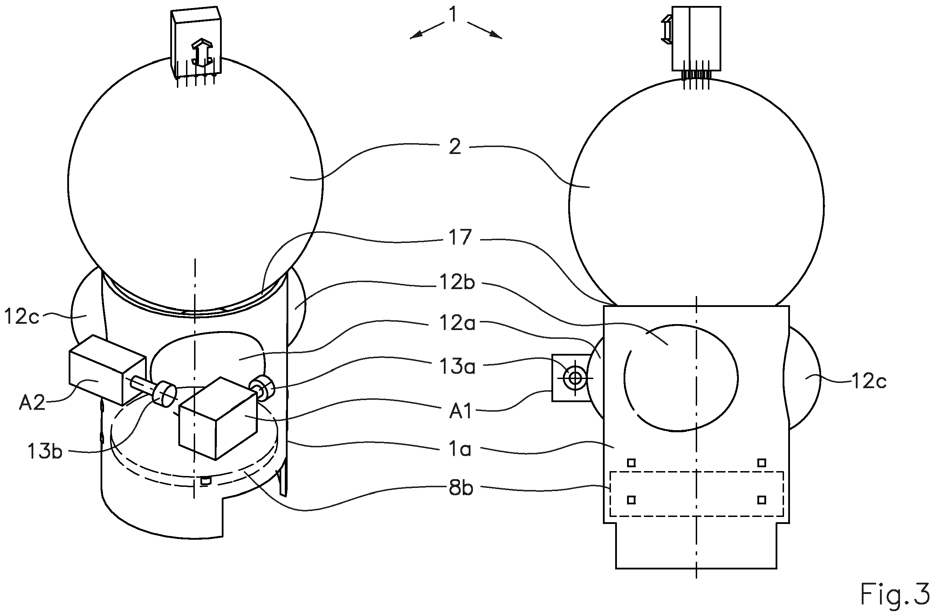

**Figur 1** zeigt eine perspektivische Darstellung eines bevorzugten Ausführungsbeispiels einer erfindungsgemäßen Maschine in zwei Ansichten. Die **Maschine** 1 umfasst ein Gestell 1a mit einer **Werkzeugebene** 1b, in welcher verschiedene Einheiten für den Gesamtprozess des Bedruckens eines **Objekts** 2 vorgesehen sind. Bei dem Objekt 2 handelt es sich bevorzugt um einen gasbefüllten **Ball** 2, dessen Umfang von dem Druck des Gases abhängt.

Die Einheiten der Werkzeugebene 1b sind:
- Ein **Abstandssensor** 3. Dieser misst den Abstand der Oberfläche des Balls 2 von einem Tintenstrahlkopf 6. Das Messergebnis wird verwendet, um eine Abstandsänderung bzw. -korrektur zu bewirken, falls der gemessene Ist-Abstand von einem vorgegebenen Soll-Abstand abweicht. Die Messung kann eine Laufzeitmessung (Ultraschall oder Licht) oder eine Triangulation (Licht) sein und es können dafür bekannte Sensoren eingesetzt werden.
- Eine **Reinigungseinheit** 4. Diese reinigt die Oberfläche des Balls 2 wenigstens an der zu bedruckenden Stelle, vorzugsweise mit einem flüssigen Reiniger. Die Einheit kann als eine Tuchwascheinheit vorgesehen sein, wobei ein mit Reiniger getränktes Tuch automatisiert über die Oberfläche geführt wird und dabei Verschmutzungen aufnimmt und die gereinigte Stelle trocknet.
- Eine **Auftragseinheit** 5 für einen Primer. Es kann erforderlich sein, die Stelle, die bedruckt werden soll, zuvor mit einem Primer zu behandeln, der das Anhaften der Tinte an der Oberfläche verbessert. Die Einheit kann als eine Spühdüse vorgesehen sein.
- Ein **Tintenstrahldruckkopf** 6. Der Druckkopf überträgt die Tintentropfen entsprechend den Bilddaten auf die Ball-Oberfläche. Für einen Mehrfarbendruck können auch mehrere Druckköpfe 6 (z.B. CMYK) vorgesehen sein. Der Druckkopf 6 kann im Abstand zum Ball 2 veränderbar angeordnet sein. Er kann zudem gedreht und/oder geschwenkt werden. Für diese Positions- und Winkelanpassungen können separate Antriebe vorgesehen sein. Dem Druckkopf kann eine Reinigungseinheit zum Reinigen und Abdecken der Düsen zugeordnet sein.
- Eine **Bestrahlungseinheit** 7. Diese erzeugt eine Strahlung, welche die aufgedruckte Tinte trocknet und/oder härtet. Bevorzugt handelt es sich um Infrarot- oder Ultraviolett-Strahlung, je nach dem eingesetzten Tintensystem. Auch Heißluftstrahlung kann eingesetzt werden.

Die Maschine 1 weist eine **Vorrichtung** 8 zum Halten des Balls 2 auf. In der gezeigten Ausführungsform umfasst die Vorrichtung 8 drei **Sauger** 8a, welche den Ball sicher und beschädigungsfrei ergreifen und durch einen jeweiligen Unterdruck halten. Anstelle der drei Sauger 8a kann auch ein kreisförmiger Sauger 8a oder ein ringförmiger Sauger 8a vorgesehen sein. Es ist erkennbar, dass die Sauger 8a dicht beieinander und benachbart zueinander an der Vorrichtung 8 angeordnet sind. Dadurch wird der Bereich der Oberfläche des Balls 2, den die Sauger 8a bedecken gering gehalten und der bedruckbare Bereich nur wenig eingeschränkt. Insbesondere ist es nicht erforderlich, die Sauger 8a auf gegenüberliegenden Seiten des Balls vorzusehen. Bevorzugt befinden sich alle Sauger 8a in einem Oberflächenabschnitt, welcher etwa 1/8 oder weniger der Gesamt-Oberfläche entspricht.

Die Maschine 1 weist eine **Vorrichtung** 9 zum Drehen des Balls 2 auf. Die Vorrichtung 9 umfasst eine **Schwinge** 9a, an welcher die Vorrichtung 8 zum Halten des Balls 2 angeordnet ist. Außerdem ist ein **erster Antrieb** A1 an der Schwinge 9 vorgesehen, welche dazu dient, die Haltevorrichtung 8 um eine **erste Drehachse** 10 zu drehen.

Die Vorrichtung 9 zum Drehen des Balls 2 ist an einer **Vorrichtung** 14 zum Ändern des Anstands zwischen der Balloberfläche, d.h. der zu bedruckenden Stelle, und dem Tintenstrahldruckkopf 6 angeordnet. Die Vorrichtung 9 ist an der Vorrichtung 14 drehbar aufgenommen und zum Drehen der Vorrichtung 9 ist ein **zweiter Antrieb** A2 vorgesehen. Die Vorrichtung 9 kann als eine Stange 9 ausgebildet sein, welche von einem **dritten Antrieb** A3 linear bewegt wird.

Die Vorrichtung 14 kann durch einen **vierten Antrieb** A4 gedreht werden. Durch diese Drehung wird der Ball 2 in den jeweiligen Wirkbereich der Einheiten der Werkzeugebene 1b gebracht, also z.B. nach dem Bedrucken mit dem Tintenstrahldruckkopf 6 zum Trocknen und/oder Härten mit der Bestrahlungseinheit 7, oder zuvor zum Reinigen mit der Einheit 4 und zum Primerauftragen mit der Einheit 5.

Zwischen den drei Saugern 8a kann eine **Einheit** 15 zum Befüllen des Balls mit Gas vorgesehen ein. Dies kann z.B. als ein eine Spitze mit einem Kanal ausgebildet sein, auf die der Balls mit seinem Ventil aufgesetzt wird und durch deren Kanal Gas unter Druck in den Ball gefüllt wird.

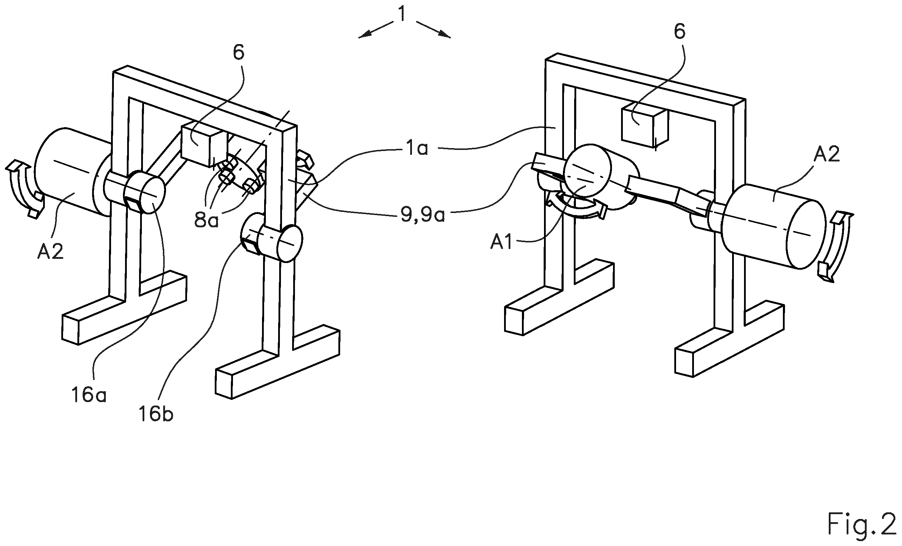

**Figur 2** zeigt eine perspektivische Darstellung eines weiteren bevorzugten Ausführungsbeispiels einer erfindungsgemäßen Maschine in zwei Ansichten. Bei dieser Maschine 1 ist die Schwinge 9a in **zwei Drehlagern** 16a und 16b am Gestell 1a aufgenommen. Beim Bedrucken wird der Ball 2 von dem zweiten Antrieb A2 am Tintenstrahldruckkopf 6 vorbeibewegt. Nachdem auf diese Weise eine erste Druckbahn auf der Oberfläche des Balls 2 gedruckt ist, wird der Ball 2 von dem ersten Antrieb A1 etwa um die Breite einer Druckbahn weitergedreht. Dann erfolgt das Drucken einer sich an die erste Druckbahn anschließenden zweiten Druckbahn durch Drehen mittels des zweiten Antriebs A2 und so fort.

In Figur 2 ist in der Werkzeugebene 1b nur die Einheit Tintenstrahldruckkopf 6 dargestellt.

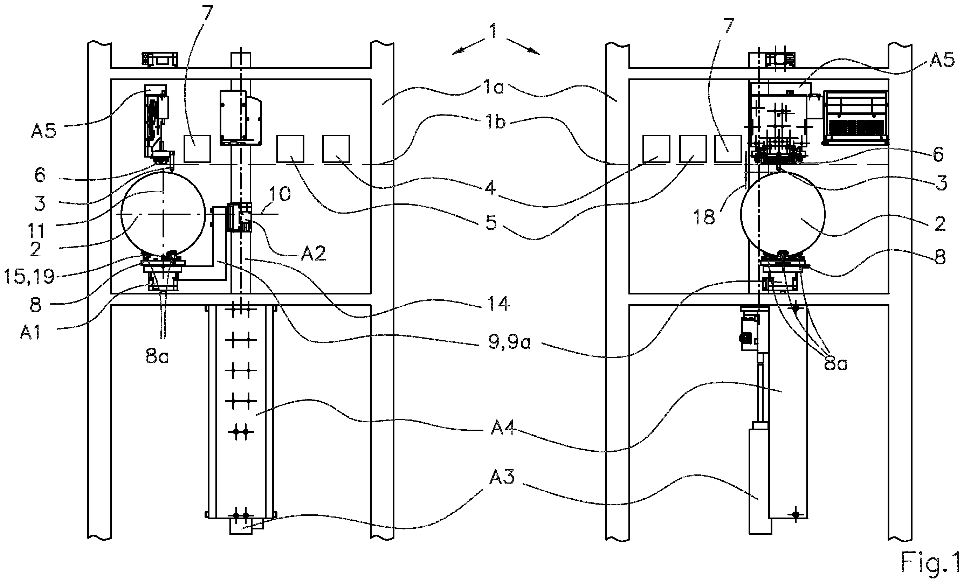

**Figur 3** zeigt eine perspektivische Darstellung eines weiteren bevorzugten Ausführungsbeispiels einer erfindungsgemäßen Maschine in zwei Ansichten. In dem Gestell 1a der Maschine 1 sind drei **Tragkugeln** 12a, 12b und 12c frei drehbar aufgenommen. Der Ball 2 wird von diesen Kugeln getragen. Die Tragkugeln können als bekannte Kugelrollen ausgeführt sein. Unterhalb der Kugeln ist ein **Ventilator** 8b angeordnet, welcher Luft durch den **Ringspalt** 17 zwischen dem Ball 2 und dem Gestell 1a ansaugt. Hierdurch wird der Ball 2 nach unten auf die Tragkugeln gezogen und steht mit diesen in Reibkontakt. Die beiden Antriebe A1 und A2 wirken über jeweilige **Reibräder** 13a und 13b auf eine Tragkugel. Eine Drehung der Antriebe führt dadurch zu einer Drehung der Tragkugel und schließlich über die Reibung zu einer Drehung des Balls. Der Ball 2 ist auf diese Weise frei unter dem Tintenstrahldruckkopf 6 drehbar und kann daher an jeder beliebigen Stelle bedruckt werden.

Zum Bedrucken von Bällen mit verschiedenen Durchmessern kann es vorgesehen sein, die Sauger 8a verstellbar auszuführen oder die Sauger auszutauschen. Der Ringspalt 17 kann ebenfalls veränderbar ausgeführt sein, um diesen an verschieden große Bälle anzupassen.

Die Maschine kann weiterhin umfassen
- Einheit zum Bevorraten von Bällen
- Einheit zum Zuführen der Bälle zur Druckvorrichtung 6
- Einheit zum Zählen der Bälle
- Einheit zum Aufpumpen der Bälle auf einen vorgegebenen Druck vor der Zufuhr zur Druckvorrichtung 6
- Einheit zum Kontrollieren der Bälle und Ausschließen von fehlerhaften Bällen
- Einheit zum Ausrichten der Bälle in der Maschine 1
- eine Druckvorrichtung 6 mit wechselbaren Druckköpfen
- eine Tintenversorgung für die Druckköpfe 6
- eine Einheit zum Kontrollieren des Aufdrucks und zum Ausschließen fehlerhaft bedruckter Bälle
- eine Einheit zum Überführen der fertigen Bälle zu einer Verpackungsmaschine
- ein Gehäuse zum Schutz der Bälle und des Bedieners

### Bezugszeichenliste

- 1: Maschine
- 1a: Gestell
- 1b: Werkzeugebene
- 2: Objekt
- 3: Abstandssensor
- 4: Reinigungseinheit
- 5: Auftragseinheit für Primer
- 6: Tintenstrahldruckkopf
- 7: Bestrahlungseinheit
- 8: Vorrichtung zum Halten des Objekts
- 8a: Sauger
- 8b: Ventilator
- 9: Vorrichtung zum Drehen des Objekts
- 9a: Schwinge
- 10, 11: Drehachsen
- 12a, b, c: Tragkugeln
- 13a, b: Reibräder
- 14: Vorrichtung zum Ändern des Abstands
- 15: Einheit zum Befüllen des Objekts
- 16a, b: Drehlager
- 17: Ringspalt
- 18: Abstand
- 19: Regelung

- A1: erster Antrieb
- A2: zweiter Antrieb
- A3: dritter Antrieb
- A4: vierter Antrieb
- A5: fünfter Antrieb

## Patentansprüche

1. **Maschine** zum Tintenstrahl-Bedrucken von dreidimensionalen Objekten mit einer Vorrichtung (6) zum Tintenstrahl-Bedrucken eines Objekts (2), welche einen Tintenstrahldruckkopf (6) umfasst, einer Vorrichtung (8) zum Halten des Objekts (2) und einer Vorrichtung (9) zum Drehen des Objekts (2), welche einen ersten Antrieb (A1) und einen zweiten Antrieb (A2) zum Drehen des Objekts (2) um zwei voneinander verschiedene Drehachsen (10, 11) umfasst, wobei die Vorrichtung (8) zum Halten des Objekts (2) wenigstens einen Sauger (8a) umfasst,
**dadurch gekennzeichnet,**
**dass** die Vorrichtung (9) zum Drehen des Objekts (2) an einer Vorrichtung (14) zum Ändern des Abstands (18) der Objektoberfläche (18) vom Tintenstrahldruckkopf (6) angeordnet ist, wobei letztere Vorrichtung (14) einen dritten Antrieb (A3) zum Verändern dieses Abstands (18) umfasst.

2. Maschine nach Anspruch 1 ,
**dadurch gekennzeichnet,**
**dass** die Vorrichtung (9) zum Drehen des Objekts (2) eine Schwinge (9a) umfasst, wobei der zweite Antrieb (A2) die Schwinge (9a) und der erste Antrieb (A1) den Sauger (8a) antreiben.

3. Maschine nach Anspruch 2,
**dadurch gekennzeichnet,**
**dass** sich die Drehachsen (10, 11) kreuzen und senkrecht aufeinander stehen,

4. Maschine nach einem der vorhergehenden Ansprüche 2 oder 3,
**dadurch gekennzeichnet,**
**dass** die Schwinge (9a) an der Vorrichtung (14) zum Verändern des Abstands (18) des Objekts (2) vom Tintenstrahldruckkopf (6) angeordnet ist.

5. Maschine nach Anspruch 4,
**dadurch gekennzeichnet,**
**dass** die Vorrichtung (14) zum Verändern des Abstands (18) des Objekts (2) vom Tintenstrahldruckkopf (6) einen vierten Antrieb (A4) zum Drehen dieser Vorrichtung (14) umfasst.

6. Maschine nach einem der vorhergehenden Ansprüche ,
**dadurch gekennzeichnet,**
**dass** die Vorrichtung (6) zum Tintenstrahl-Bedrucken einen fünften Antrieb (A5) zum Positionieren des Tintenstrahldruckkopfs (6) relativ zum Objekt (2) und einen Sensor (3) zum Messen des Abstands (18) von Tintenstrahldruckkopf (6) und Objekt (2) umfasst.

7. Maschine nach einem der vorhergehenden Ansprüche,
**dadurch gekennzeichnet,**
**dass** das Objekt (2) ein Ball (2) ist, wobei der Ball (2) eine gasgefüllte Hülle umfasst und die Maschine eine Einheit (15) zum Befüllen des Objekts mit Gas umfasst.

8. Maschine nach Anspruch 7,
**dadurch gekennzeichnet,**
**dass** die Einheit (15) zum Befüllen des Balls (2) mit Gas eine Regelung (19) umfasst, welche den Ball (2) solange mit Gas befüllt oder entleert, bis der Abstand (18) des Balls (2) zum Tintenstrahldruckkopf (6) einem vorgegebenen Wert entspricht.

9. Maschine nach einem der vorhergehenden Ansprüche,
**dadurch gekennzeichnet,**
**dass** die Vorrichtung (8) zum Halten des Objekts (2) wenigstens zwei oder drei Sauger (8a) umfasst und dass die Sauger (8a) benachbart zueinander an der Vorrichtung (8) zum Halten des Objekts (2) angeordnet sind.

10. Maschine nach einem der vorhergehenden Ansprüche,
**dadurch gekennzeichnet,**
**dass** eine Werkzeugebene (1b) mit verschiedenen Einheiten vorhanden ist, welche über der Vorrichtung (8) zum Halten des Objekts (2) angeordnet.

11. Maschine zum Tintenstrahl-Bedrucken von dreidimensionalen Objekten mit einer Vorrichtung (6) zum Tintenstrahl-Bedrucken eines Objekts (2), welche einen Tintenstrahldruckkopf (6) umfasst, einer Vorrichtung (8) zum Halten des Objekts (2), einer Vorrichtung (9) zum Drehen des Objekts (2), welche einen ersten Antrieb (A1) und einen zweiten Antrieb (A2) zum Drehen des Objekts (2) um zwei voneinander verschiedene Drehachsen (10, 11) umfasst und einer Werkzeugebene (1b), wobei die Werkzeugebene (1b) über der Vorrichtung (8) zum Halten des Objekts (2) angeordnet ist und wobei der Tintenstrahldruckkopf (6) in der Werkzeugebene (1) angeordnet ist oder mehrere Tintenstrahldruckköpfe (6) in der Werkzeugebene (1) angeordnet sind und wobei die Werkzeugebene (1b) verschiedene Einheiten aufweist und der Tintenstrahlkopf (6) bzw. die Tintenstrahlköpfe (6) eine Einheit der verschiedenen Einheiten darstellt bzw. darstellen, wobei die Vorrichtung (18) zum Halten des Objekts (2) wenigstens einen Sauger (8a) umfasst,
**dadurch gekennzeichnet,**
**dass** eine Vorrichtung (14) zum Ändern des Abstands (18) der Objektoberfläche (18) vom in der Werkzeugebene (1b) angeordneten Tintenstrahldruckkopf (6) vorhanden ist.

12. Maschine nach Anspruch 10 oder 11,
**dadurch gekennzeichnet, dass** die Werkzeugebene (1b) einen Abstandssensor (3) aufweist, welcher den Abstand der Objektoberfläche (18) vom Tintenstrahldruckkopf (6) misst.

13. Maschine nach Anspruch 10 oder 11,
**dadurch gekennzeichnet, dass** die Werkzeugebene (1b) eine Reinigungseinheit (4) aufweist, welche die Objektoberfläche (18) reinigt.

14. Maschine nach Anspruch 10 oder 11,
**dadurch gekennzeichnet, dass** die Werkzeugebene (1b) eine Auftragseinheit (5) aufweist, welche einen Primer auf die Objektoberfläche (18) aufträgt.

15. Maschine nach Anspruch 10,
**dadurch gekennzeichnet, dass** die Werkzeugebene (1b) den Tintenstrahldruckkopf (6) oder mehrere Tintenstrahldruckköpfe (6) aufweist.

16. Maschine nach Anspruch 10 oder 11,
**dadurch gekennzeichnet, dass** die Werkzeugebene (1b) eine Bestrahlungseinheit (7) aufweist, welche aufgedruckte Tinte trocknet und/oder härtet.

## Claims

1. Machine for printing on three-dimensional objects in an ink jet process, including a device (6) for printing on an object (2) in an ink jet process, the device (6) comprising an ink jet print head (6),
the machine further comprising a device (8) for holding the object (2), and
a device (9) for rotating the object (2), the device (9) comprising a first drive (A1) and a second drive (A2) for rotating the object (2) about two different axes of rotation (10, 11), wherein the device (8) for holding the object (2) comprises at least one suction element (8a),
**characterized in**
**that** the device (9) for rotating the object (2) is disposed on a device (14) for modifying the distance (18) between the object surface (18) and the ink jet print head (6), the latter device (14) comprising a third drive (A3) for modifying said distance (18).

2. Machine according to claim 1,
**characterized in**
**that** the device (9) for rotating the object (2) includes a rocker (9a), the second drive (A2) driving the rocker (9a) and the first drive (A1) driving the suction element (8a).

3. Machine according to claim 2,
**characterized in**
**that** the axes of rotation (10, 11) intersect and are perpendicular to one another.

4. Machine according to any one of the preceding claims,
**characterized in**
**that** the rocker (9a) is disposed on the device (14) for modifying the distance (18) between the object (2) and the ink jet print head (6).

5. Machine according to claim 4,
**characterized in**
**that** the device (14) for modifying the distance (18) between the object (2) and the ink jet print head (6) comprises a fourth drive (A4) for rotating said device (14).

6. Machine according to any one of the preceding claims,
**characterized in**
**that** the device (6) for ink jet printing comprises a fifth drive (A5) for positioning the ink jet print head (6) relative to the object (2) and a sensor (3) for measuring the distance (18) between the ink jet print head (6) and the object (2).

7. Machine according to any one of the preceding claims,
**characterized in**
**that** the object (2) is a ball (2), said ball (2) comprising a gas-filled cover, and the machine comprises a unit (15) for filling the object with gas.

8. Machine according to claim 7,
**characterized in**
**that** the unit (15) for filling the ball (2) with gas comprises a control (19) for filling the ball (2) with gas or emptying the ball (2) of gas until the distance (18) between the ball (2) and the ink jet print head (6) corresponds to a predefined value.

9. Machine according to any one of the preceding claims,
**characterized in**
**that** the device (8) for holding the object (2) comprises at least two or three suction elements (8a) and that the suction elements (8a) are disposed adjacent to one another on the device (8) for holding the object (2).

10. Machine according to any one of the preceding claims,
**characterized in**
**that** a tool plane (1b) having various units is provided above the device (8) for holding the object (2).

11. Machine for printing on three-dimensional objects in an ink jet process, including a device (6) for printing on an object (2) in a ink jet process, the device (6) comprising an ink jet print head (6),
the machine further comprising a device (8) for holding the object (2),
a device (9) for rotating the object (2), the device (9) comprising a first drive (A1) and a second drive (A2) for rotating the object (2) about two different axes of rotation (10, 11), and a tool plane (1b), the tool plane (1b) disposed above the device for holding the object, wherein the ink jet print head (6) is disposed in the tool plane (1) or multiple ink jet print heads (6) are disposed in the tool plane (1), and wherein the tool plane includes multiple units and wherein the ink jet print head (6) or ink jet print heads (6) represent a unit of the different units, and wherein the device (8) for holding the object (2) comprising at least one suction element (8a),
**characterized in**
**that** a device (14) for modifying the distance (18) between the object surface (18) and the ink jet print head (6) disposed in the tool plane (1b) is provided.

12. Machine according to claim 10 or 11,
**characterized in**
**that** the tool plane (1b) includes a distance sensor (3) for measuring the distance between the object surface (18) and the ink jet print head (6).

13. Machine according to claim 10 or 11,
**characterized in**
**that** the tool plane (1b) includes a cleaning unit (4) for cleaning the object surface (18).

14. Machine according to claim 10 or 11,
**characterized in**
**that** the tool plane (1b) includes an application unit (5) for applying a primer to the object surface (18).

15. Machine according to claim 10,
**characterized in**
**that** the tool plane (1b) includes the ink jet print head (6) or multiple ink jet print heads (6).

16. Machine according to claim 10 or 11,
**characterized in**
**that** the tool plane (1b) includes a radiation unit (7) for drying and/or curing applied ink.

## Revendications

1. **Machine** pour l'impression à jet d'encre d'objets tridimensionnels avec un dispositif (6) pour l'impression à jet d'encre d'un objet (2), comprenant une tête d'impression à jet d'encre (6), un dispositif (8) pour la fixation de l'objet (2) et un dispositif (9) pour la rotation de l'objet (2), comprenant un premier entraînement (A1) et un deuxième entraînement (A2) pour la rotation de l'objet (2) et deux axes rotatifs (10, 11) distincts, le dispositif (8) servant à la fixation de l'objet (2) comprenant au moins une ventouse (8a),
**caractérisée par le fait**
**que** le dispositif (9) pour la rotation de l'objet (2) est fixé sur un dispositif (14) destiné à modifier la distance (18) de la surface de l'objet (18) par rapport à la tête d'impression à jet d'encre (6), ce dernier dispositif (14) possédant un troisième entraînement (A3) permettant de modifier cette distance (18).

2. Machine selon la revendication 1,
**caractérisée par le fait**
**que** le dispositif (9) pour la rotation de l'objet (2) comprend un bras oscillant (9a), le deuxième entraînement (A2) entraînant le bras oscillant (9a) et le premier entraînement (A1) la ventouse (8a).

3. Machine selon la revendication 2,
**caractérisée par le fait**
**que** les axes rotatifs (10, 11) se croisent et sont positionnés verticalement l'un au-dessus de l'autre.

4. Machine selon l'une des revendications 2 ou 3 précédentes,
**caractérisée par le fait**
**que** le bras oscillant (9a) est positionné sur le dispositif (14) pour modifier la distance (18) de l'objet (2) par rapport à la tête d'impression à jet d'encre (6).

5. Machine selon la revendication 4,
**caractérisée par le fait**
**que** le dispositif (14) pour modifier la distance (18) de l'objet (2) par rapport à la tête d'impression à jet d'encre (6) possède un quatrième entraînement (A4) pour la rotation de ce dispositif (14).

6. Machine selon l'une des revendications précédentes,
**caractérisée par le fait**
**que** le dispositif (6) destiné à l'impression à jet d'encre comprend un cinquième entraînement (A5) pour le positionnement relatif de la tête d'impression à jet d'encre (6) par rapport à l'objet (2) et un détecteur (3) pour la mesure de la distance (18) de la tête d'impression à jet d'encre (6) par rapport à l'objet (2).

7. Machine selon l'une des revendications précédentes,
**caractérisée par le fait**
**que** l'objet (2) est une balle (2), la balle (2) étant une enveloppe remplie de gaz et que la machine comprend une unité (15) pour le remplissage de l'objet avec du gaz.

8. Machine selon la revendication 7,
**caractérisée par le fait**
**que** l'unité (15) pour le remplissage de la balle (2) avec du gaz comprend une régulation (19), qui remplit la balle (2) de gaz ou la vide jusqu'à ce que la distance (18) de la balle (2) par rapport à la tête d'impression à jet d'encre (6) corresponde à une valeur prédéfinie.

9. Machine selon l'une des revendications précédentes,
**caractérisée par le fait**
**que** le dispositif (8) de fixation de l'objet (2) comprend au moins deux ou trois ventouses (8a) et que les ventouses (8a) sont disposées l'une à côté de l'autre sur le dispositif (8) pour la fixation de l'objet (2).

10. Machine selon l'une des revendications précédentes,
**caractérisée par le fait**
**qu'**il existe un niveau outil (1 b) avec différentes unités, disposées au-dessus du dispositif (8) pour la fixation de l'objet (2).

11. Machine pour l'impression à jet d'encre d'objets tridimensionnels avec un dispositif (6) pour l'impression à jet d'encre d'un objet (2), comprenant une tête d'impression à jet d'encre (6), un dispositif (8) pour la fixation de l'objet (2), un dispositif (9) pour la rotation de l'objet (2), comprenant un premier entraînement (A1) et un deuxième entraînement (A2) pour la rotation de l'objet (2) autour de deux axes rotatifs (10, 11) distincts et un niveau outil (1b), le niveau outil (1b) étant disposé au-dessus du dispositif (8) de fixation de l'objet (2) et la tête d'impression à jet d'encre (6) étant disposée dans le niveau outil (1) ou plusieurs têtes d'impression à jet d'encre (6) étant disposées dans le niveau outil (1), pour laquelle le niveau outil (1b) présente différentes unités et la tête d'impression à jet d'encre (6) ou les têtes d'impression à jet d'encre (6) représente(nt) une unité des différentes unités, le dispositif (18) de fixation de l'objet (2) comprenant au moins une ventouse (8a),
**caractérisée par le fait**
**qu'**il existe un dispositif (14) pour la modification de la distance (18) de la surface de l'objet (18) par rapport à la tête d'impression à jet d'encre (6) disposée dans le niveau outil (1 b).

12. Machine selon la revendication 10 ou 11,
**caractérisée par le fait**
**que** que le niveau outil (1 b) présente un détecteur de distance (3), qui mesure la distance de la surface de l'objet (18) par rapport à la tête d'impression à jet d'encre (6).

13. Machine selon la revendication 10 ou 11,
**caractérisée par le fait**
**que** le niveau outil (1 b) présente une unité de nettoyage (4), qui nettoie la surface de l'objet (18).

14. Machine selon la revendication 10 ou 11,
**caractérisée par le fait**
**que** le niveau outil (1 b) présente une unité d'application (5), qui applique une couche première sur la surface de l'objet (18).

15. Machine selon la revendication 10,
**caractérisée par le fait**
quele niveau outil (1 b) présente la tête d'impression à jet d'encre (6) ou plusieurs têtes d'impression à jet d'encre (6).

16. Machine selon la revendication 10 ou 11,
**caractérisée par le fait**
**que** le niveau outil (1b) présente une unité d'irradiation (7) assurant le séchage et/ou le durcissement de l'encre appliquée.
